# EUROPÄISCHE PATENTANMELDUNG

(11) **EP 4 173 779 A1**
(43) Veröffentlichungstag der Anmeldung: **03.05.2023**
(21) Anmeldenummer: 22170221.0
(22) Anmeldetag: 27.04.2022
(51) Int. Cl.: B25J 19/00, B25J 19/06, B60R 21/23, E04H 15/20

(54) **RÜCKZIEHVORRICHTUNG FÜR EINE BEFÜLLBARE UND/ODER EVAKUIERBARE BIEGESCHLAFFE HÜLLE, FUNKTIONSVORRICHTUNG MIT EINER BEFÜLLBAREN UND/ODER EVAKUIERBAREN BIEGESCHLAFFEN HÜLLE UND VERFAHREN ZUM BETÄTIGEN EINER FUNKTIONSVORRICHTUNG**

(30) Priorität: 29.10.2021 DE 102021128397
(71) Anmelder: Deutsches Zentrum für Luft- und Raumfahrt e.V., 53227 Bonn (DE)
(72) Erfinder: Cremer, Jan, 82234 Weßling (DE); Butsch, Dimitri, 82234 Weßling (DE); Brusamento, Donato, 82234 Weßling (DE); Weitschat, Roman, 82234 Weßling (DE)
(74) Vertreter: Ege Lee & Roider Patentanwälte

(57) **Zusammenfassung**

Rückziehvorrichtung für eine befüllbare und/oder evakuierbare biegeschlaffe Hülle (102), die Rückziehvorrichtung aufweisend wenigstens ein ausziehbares und/oder zurückziehbares Zugmittel (118, 128) und wenigstens einen Antrieb (124) zum Zurückziehen des wenigstens einen Zugmittels (118, 128), wobei die Rückziehvorrichtung eine Sensoreinrichtung mit wenigstens einem Sensor (106) aufweist, die dazu ausgelegt ist, ein Ausziehen und/oder Zurückziehen des wenigstens einen Zugmittels (118, 128) zu erfassen, Funktionsvorrichtung mit einer befüllbaren und/oder evakuierbaren biegeschlaffen Hülle (102) und einer derartigen Rückziehvorrichtung und Verfahren zum Betätigen einer derartigen Funktionsvorrichtung, wobei bei einem Befüllen und/oder bei einem Evakuieren der Hülle (102) mithilfe der Sensoreinrichtung ein Ausziehen und/oder ein Zurückziehen des wenigstens einen Zugmittels (118, 128), ein Ausziehen und/oder ein Zurückziehen mehrerer Zugmittel (118, 128) und/oder ein Bilden einer Aktivform und/oder Bilden einer Deaktivform der Hülle (102) überwacht wird.

## Beschreibung

Die Erfindung betrifft eine Rückziehvorrichtung für eine befüllbare und/oder evakuierbare biegeschlaffe Hülle, die Rückziehvorrichtung aufweisend wenigstens ein ausziehbares und/oder zurückziehbares Zugmittel und wenigstens einen Antrieb zum Zurückziehen des wenigstens einen Zugmittels. Außerdem betrifft die Erfindung eine Funktionsvorrichtung mit einer befüllbaren und/oder evakuierbaren biegeschlaffen Hülle. Außerdem betrifft die Erfindung ein Verfahren zum Betätigen einer Funktionsvorrichtung.

Aus dem Dokument WO 2017/158120 A1 ist eine Schutzvorrichtung bekannt für einen Effektor eines Manipulators, wobei die Schutzvorrichtung eine biegeschlaffe Hülle, die einen befüllbaren und/oder evakuierbaren Druckraum begrenzt, wenigstens ein erstes Zugmittel zum Zurückziehen der Hülle und wenigstens einen Aktuator zum Beaufschlagen des wenigstens einen ersten Zugmittels mit einer Zugkraft aufweist. Der Druckraum kann befüllt und das wenigstens eine erste Zugmittel kann freigegeben werden, wenn eine Manipulation eines Werkstücks nicht vorgesehen ist und/oder der Druckraum kann evakuiert und das wenigstens eine erste Zugmittel kann mithilfe des Aktuators mit einer Zugkraft beaufschlagt werden, wenn eine Manipulation eines Werkstücks vorgesehen ist.

Der Erfindung liegt die Aufgabe zugrunde, eine eingangs genannte Rückziehvorrichtung strukturell und/oder funktionell zu verbessern. Außerdem liegt der Erfindung die Aufgabe zugrunde, eine eingangs genannte Funktionsvorrichtung strukturell und/oder funktionell zu verbessern. Außerdem liegt der Erfindung die Aufgabe zugrunde, ein eingangs genanntes Verfahren strukturell und/oder funktionell zu verbessern.

Die Aufgabe wird gelöst mit einer Rückziehvorrichtung mit den Merkmalen des Anspruchs 1. Außerdem wird die Aufgabe gelöst mit einer Funktionsvorrichtung mit den Merkmalen des Anspruchs 7. Außerdem wird die Aufgabe gelöst mit einem Verfahren mit den Merkmalen des Anspruchs 11. Vorteilhafte Ausführungen und/oder Weiterbildungen sind Gegenstand der abhängigen Ansprüche.

Die Rückziehvorrichtung kann dazu ausgelegt sein, die Hülle bei einem Befüllen freizugeben und/oder zu führen und/oder die Hülle bei einem Evakuieren zurückzuziehen und/oder zu führen. Die Rückziehvorrichtung kann zur Verwendung in einer Funktionseinrichtung ausgelegt sein.

Die Rückziehvorrichtung kann wenigstens ein Rückziehmodul aufweisen. Die Rückziehvorrichtung kann ein einziges Rückziehmodul oder mehrere Rückziehmodule aufweisen. Ein Rückziehmodul kann ein Gehäuse, ein Auf- und/oder Abwickelelement, ein Zugmittel, einen Antrieb und/oder wenigstens einen Sensor aufweisen.

Das wenigstens eine Zugmittel kann dazu ausgelegt sein, Zugkräfte aufzunehmen und/oder zu übertragen. Das wenigstens eine Zugmittel kann zumindest abschnittsweise zugfest, schlaff, biegeweich und/oder torsionsweich sein. Das wenigstens eine Zugmittel kann als Seil ausgeführt sein. Das wenigstens eine Zugmittel kann zumindest abschnittsweise elastisch, insbesondere federelastisch oder gummielastisch, sein. Das wenigstens eine Zugmittel kann zumindest abschnittsweise aus Textilfasern, Kunststoff oder Draht hergestellt sein. Das wenigstens eine Zugmittel kann zumindest abschnittsweise aus einem elektroaktiven Polymer hergestellt sein. Das wenigstens eine Zugmittel kann aufwickelbar sein. Das wenigstens eine Zugmittel kann ein erstes Ende und ein zweites Ende aufweisen. Das erste Ende kann mit dem wenigstens einen Antrieb, insbesondere mit dessen Auf- und/oder Abwickelelement, zugfest verbunden sein. Das zweite Ende kann zum zugfesten Verbinden mit der Hülle ausgelegt sein. Bei einem Ausziehen des wenigstens einen Zugmittels kann sich dessen wirksame Länge vergrößern. Bei einem Einziehen des wenigstens einen Zugmittels kann sich dessen wirksame Länge verringern.

Der wenigstens eine Antrieb kann dazu ausgelegt sein, das wenigstens eine Zugmittel zurückzuziehen und/oder freizugeben, insbesondere kontrolliert freizugeben. Der wenigstens eine Antrieb kann einen mechanischen Energiespeicher aufweisen. Der mechanische Energiespeicher kann als Feder, insbesondere als Spiralfeder, ausgeführt sein. Der mechanische Energiespeicher kann zwischen dem Gehäuse und dem Bei einem Ausziehen des wenigstens einen Zugmittels kann in dem mechanischen Energiespeicher mechanische Energie speicherbar sein. Das wenigstens eine Zugmittel kann unter Nutzung von in dem mechanischen Energiespeicher gespeicherter mechanischer Energie zurückziehbar sein. Der wenigstens eine Antrieb kann einen Motor und/oder ein Getriebe aufweisen. Der Motor kann ein Elektromotor sein. Der Motor kann eine Kolben-Zylinder-Anordnung aufweisen. Motor kann ein Hydraulikmotor oder eine Pneumatikmotor sein. Das Getriebe kann zum Wandeln einer Kraft, ein Moment und/oder einer Drehbewegung ausgelegt sein. Das Auf- und/oder Abwickelelement kann zum Auf- und/oder Abwickeln des wenigstens einen Zugmittels ausgelegt sein. Das Auf- und/oder Abwickelelement kann mithilfe des mechanischen Energiespeichers und/oder des Motors antreibbar sein. Das Auf- und/oder Abwickelelement kann als Spindel, Haspel oder Welle ausgeführt sein.

Die Sensoreinrichtung und/oder der wenigstens eine Sensor können/kann dazu ausgelegt sein, ein Signal zur Verfügung zu stellen. Das Signal kann eine elektrisches Signal sein. Die Sensoreinrichtung kann dazu ausgelegt sein, ein Ausziehen und/oder Zurückziehen des wenigstens einen Zugmittels mittelbar und/oder unmittelbar zu erfassen.

Die Rückziehvorrichtung kann ein einziges Zugmittel oder mehrere Zugmittel aufweisen. Wenn die Rückziehvorrichtung mehrere Zugmittel aufweist, können diese unterschiedlichen Abschnitten der Hülle zugeordnet sein. Wenn die Rückziehvorrichtung mehrere Zugmittel und die Hülle mehrere Druckräume oder Kammern aufweist, können die Zugmittel unterschiedlichen Druckräume oder Kammern zugeordnet sein. Die Rückziehvorrichtung kann einen einzigen Antrieb oder mehrere Antriebe aufweisen. Wenn die Rückziehvorrichtung mehrere Antriebe aufweist, können diese unterschiedlichen Zugmitteln zugeordnet sein. Die Sensoreinrichtung kann einen einzigen Sensor oder mehrere Sensoren aufweisen.

Der wenigstens eine Sensor kann dem wenigstens einen Zugmittel oder dem wenigstens einen Antrieb zugeordnet sein. Wenn die Rückziehvorrichtung mehrere Sensoren aufweist, können diese unterschiedlichen Zugmitteln und/oder unterschiedlichen Antrieben zugeordnet sein. Der wenigstens eine Sensor kann dem mechanischen Energiespeicher des wenigstens einen Antriebs zugeordnet sein. Der wenigstens eine Sensor kann dem Motor oder dem Getriebe des wenigstens einen Antriebs zugeordnet sein. Der wenigstens eine Sensor kann der Welle des wenigstens einen Antriebs zugeordnet sein.

Die Sensoreinrichtung kann wenigstens einen Wegsensor aufweisen. Der wenigstens eine Wegsensor kann ein Linearwegsensor oder ein Drehwegsensor sein. Der wenigstens eine Wegsensor kann Inkrementalgeber oder ein Absolutwertgeber sein. Die Sensoreinrichtung kann wenigstens einen Kraftsensor aufweisen.

Die Rückziehvorrichtung kann eine elektrische Kontrolleinrichtung aufweisen. Die Kontrolleinrichtung der Rückziehvorrichtung kann zum Auswerten von Signalen der Sensoreinrichtung ausgelegt sein. Die elektrische Kontrolleinrichtung der Rückziehvorrichtung kann einen Prozessor, einen Arbeitsspeicher, einen Datenspeicher, wenigstens einen Signaleingang für Signale der Sensoreinrichtung und/oder wenigstens einen Signalausgang aufweisen. Die Sensoreinrichtung kann mit der elektrische Kontrolleinrichtung der Rückziehvorrichtung signalleitend verbunden sein. Die elektrische Kontrolleinrichtung kann zum regelungstechnischen und/oder steuerungstechnischen Kontrollieren ausgelegt sein.

Die Funktionsvorrichtung kann zum Erfüllen einer vorgegebenen Funktion ausgelegt sein. Die Funktionsvorrichtung kann zum Erfüllen einer Schutzfunktion ausgelegt sein. Die Funktionsvorrichtung kann eine Schutzvorrichtung, beispielsweise für einen Effektor eines Manipulators, sein. Die Funktionsvorrichtung kann zum Erfüllen einer Aktuatorfunktion ausgelegt sein. Die Funktionsvorrichtung kann pneumatischer Muskel sein.

Die Hülle kann aus einem forminstabilen, formlabilen und/oder nicht formstabilen Material hergestellt sein. Die Hülle kann aus einem Material mit einem derart niedrigen Elastizitätsmodul und/oder einer derart geringen Dehnsteifigkeit hergestellt sein, dass große Verformungen bereits infolge geringer Kraft- und Momentbeanspruchung auftreten. Die Hülle kann aus einem zumindest annähernd fluiddichten, insbesondere gasdichten, insbesondere luftdichten, Material hergestellt sein. Die Hülle kann aus einem textilen Material hergestellt sein. Die Hülle kann aus einem Gewebe hergestellt sein. Die Hülle kann aus Polyamid hergestellt sein.

Die Hülle kann wenigstens einen Druckraum begrenzen. Die Hülle und/oder der wenigstens eine Druckraum können/kann eine Innenseite und eine Außenseite aufweisen. Der wenigstens eine Druckraum kann befüllbar und/oder evakuierbar sein. Die Hülle und/oder der wenigstens eine Druckraum können/kann mit einem Gas, insbesondere mit Luft, befüllbar sein. Die Hülle und/oder der wenigstens eine Druckraum können/kann gasleer, insbesondere luftleer, gemacht werden. Die Hülle und/oder der wenigstens eine Druckraum können/kann wenigstens einen Einlass und/oder wenigstens einen Auslass aufweisen. Der wenigstens eine Einlass und der wenigstens eine Auslass können voneinander strukturell gesondert oder miteinander strukturell kombiniert sein.

Die Kammern können einzeln und/oder gruppenweise voneinander fluiddicht getrennt sein. Einzelne und/oder gruppenweise voneinander fluiddicht getrennte Kammern können Druckräume bilden. Die Kammern können gruppenweise miteinander fluiddurchlässig kommunizierend verbunden sein. Zwischen den Kammern können fluiddichte Trennwände angeordnet sein. Die Kammern können einzeln oder gruppenweise austauschbar sein. Die Kammern können einzeln oder gruppenweise reparierbar sein.

Das zweite Ende des wenigstens einen Zugmittels kann mit der Hülle zugfest verbunden sein. Das wenigstens eine Zugmittel kann bei einem Befüllen der Hülle ausgezogen werden.

Die Hülle kann in einem vollständig befüllten Zustand eine vorbestimmte Aktivform aufweisen. Wenn die Hülle zur vorbestimmten Aktivform befüllt ist, kann die Funktionsvorrichtung aktiviert oder in Funktion gesetzt sein. In der vorbestimmten Aktivform kann die Hülle eine vorgegebene dreidimensionale Geometrie aufweisen. Die Hülle kann in einem vollständig evakuierten Zustand eine vorbestimmte Deaktivform aufweisen. Wenn die Hülle zur vorbestimmten Deaktivform evakuiert ist, kann die Funktionsvorrichtung deaktiviert oder außer Funktion gesetzt sein. In der Deaktivform kann die Hülle zusammengefaltet und/oder verstaut sein.

Die Funktionsvorrichtung kann ein Beaufschlagungsmodul zum Befüllen und/oder Evakuieren des wenigstens einen Druckraums aufweisen. Das Beaufschlagungsmodul kann einen Druckerzeuger aufweisen. Der Druckerzeuger kann zum Erzeugen von Über- und/oder Unterdruck dienen. Der Druckerzeuger kann eine Pumpe, insbesondere eine Hubkolbenpumpe, aufweisen. Die Pumpe kann in einem Druckbetrieb und/oder in einem Saugbetrieb betreibbar sein. Das Beaufschlagungsmodul kann wenigstens ein Ventil aufweisen. Das wenigstens eine Ventil kann elektrisch, elektromotorisch, elektromagnetisch und/oder pneumatisch betätigbar sein. Die Funktionsvorrichtung kann wenigstens einen Drucksensor zum Erfassen eines Drucks in dem wenigstens einen Druckraum aufweisen.

Die Funktionsvorrichtung kann eine elektrische Kontrolleinrichtung aufweisen. Die Kontrolleinrichtung der Funktionsvorrichtung kann zum Auswerten von Signalen des Beaufschlagungsmoduls und/oder des wenigstens einen Drucksensors ausgelegt sein. Die Kontrolleinrichtung der Funktionsvorrichtung kann zum Kontrollieren des Beaufschlagungsmoduls ausgelegt sein. Das Beaufschlagungsmodul und/oder der wenigstens eine Drucksensor können/kann mit der elektrische Kontrolleinrichtung der Funktionsvorrichtung signalleitend verbunden sein. Die elektrische Kontrolleinrichtung der Funktionsvorrichtung kann zum Auswerten von Signalen des Beaufschlagungsmoduls und/oder des wenigstens einen Drucksensors ausgelegt sein. Die elektrische Kontrolleinrichtung der Funktionsvorrichtung kann einen Prozessor, einen Arbeitsspeicher, einen Datenspeicher, wenigstens einen Signaleingang für Signale des Beaufschlagungsmoduls und/oder des wenigstens einen Drucksensors und/oder wenigstens einen Signalausgang für Signale des Beaufschlagungsmoduls aufweisen. Die elektrische Kontrolleinrichtung der Rückziehvorrichtung und die elektrische Kontrolleinrichtung der Funktionsvorrichtung können miteinander signalleitend verbunden sein. Die elektrische Kontrolleinrichtung der Rückziehvorrichtung und die elektrische Kontrolleinrichtung der Funktionsvorrichtung können strukturell und/oder funktionell miteinander verbunden sein.

Bei einem Überwachen können Signale wenigstens eines Sensors der Sensoreinrichtung und/oder wenigstens eines Drucksensors der Funktionsvorrichtung berücksichtigt werden. Bei einem Überwachen können Signale mehrerer Sensoren miteinander kombiniert werden. Bei einem Überwachen können wenigstens ein Sensorsignal-Soll-Verlauf und wenigstens ein Sensorsignal-Ist-Verlauf miteinander verglichen werden. Damit können/kann ein Befüllungs-, Auszieh-, Evakuierungs- und/oder Zurückziehvorgang räumlich und/oder in wenigstens einer Ebene überwacht werden.

Bei einem Überschreiten und/oder Unterschreiten eines vorgegebenen Sensorsignal-Werts kann ein Fehlersignal generiert werden. Beispielsweise kann ein Fehlersignal generiert werden, wenn an dem wenigstens einen Zugmittel eine maximal zulässige Zugkraft überschritten und/oder eine minimale Zugkraft unterschritten wird. Bei einem Überschreiten einer vorgegebenen Abweichung zwischen dem wenigstens einen Sensorsignal-Soll-Verlauf und dem wenigstens einen Sensorsignal-Ist-Verlauf kann ein Fehlersignal generiert werden. Bei einem Fehlersignal kann wenigstens eine Sicherheitsmaßnahme eingeleitet werden. Bei einem Fehlersignal kann ein Befüllen und/oder ein Evakuieren der Hülle unterbrochen werden, ein Zurückziehen des wenigstens einen Zugmittels unterbrochen werden und/oder eine wahrnehmbare Ausgabe erfolgen.

Zusammenfassend und mit anderen Worten dargestellt ergibt sich somit durch die Erfindung unter anderem ein Verfahren zum Betreiben einer Positionsdetektion zum Zurückziehen von Elementen und Detektieren der Lage und Orientierung dieser. Durch das Verwenden von mehreren federgespannten Spindeln mit Seilen zum Zurückziehen pneumatischer Textilien kann ein Abrollvorgang über eine rotatorische Sensorik an der Spindel genau überwacht werden und ein Knicken des Airbags, beispielsweise durch ein Hindernis, erkannt werden. Mit einem einzigen Streckensensor kann ein Aufblasen mit überwacht werden. Mit einer Anordnung von mindestens zwei Sensoren und mithilfe eines mathematischen Modells kann ein Vergleich über eine zeitliche Änderung erfolgen und verbessertes Ergebnis mit Realabgleich erzielt werden. Mit drei oder mehr Sensoren kann die Lage des Airbags bei korrekter Funktion des Mechanismus jederzeit genau bestimmt werden. Während der Befüllung mit Druckluft von pneumatischen Textilen kann Luft in eine Kammer eingeführt werden, was wiederum zu einer Volumenausdehnung führen kann. Um das pneumatische Textil zurückzuholen kann ein Spiralfedermechanismus verwendet werden.

Mit der Erfindung wird eine Überwachung eines Befüllungs-, Auszieh-, Evakuierungs- und/oder Zurückziehvorgangs verbessert oder ermöglicht. Ein Kontrollieren eines Befüllungs-, Auszieh-, Evakuierungs- und/oder Zurückziehvorgang wird verbessert oder ermöglicht. Eine Sicherheit wird erhöht.

Nachfolgend werden Ausführungsbeispiele der Erfindung unter Bezugnahme auf Figuren näher beschrieben, dabei zeigen schematisch und beispielhaft:
- Fig. 1: eine Funktionsvorrichtung mit einer befüllbaren und/oder evakuierbaren biegeschlaffen Hülle und einer Rückziehvorrichtung mit einer Sensoreinrichtung in einem vollständig befüllten Zustand in Aktivform,
- Fig. 2: eine Funktionsvorrichtung mit einer befüllbaren und/oder evakuierbaren biegeschlaffen Hülle und einer Rückziehvorrichtung mit einer Sensoreinrichtung in einem vollständig evakuierten Zustand in Deaktivform,
- Fig. 3: ein Rückziehmodul einer Rückziehvorrichtung mit einem Sensor und
- Fig. 4: eine Funktionsvorrichtung mit einer befüllbaren und/oder evakuierbaren biegeschlaffen Hülle und einer Rückziehvorrichtung mit einer Sensoreinrichtung bei einem Befüllen mit Kollision.

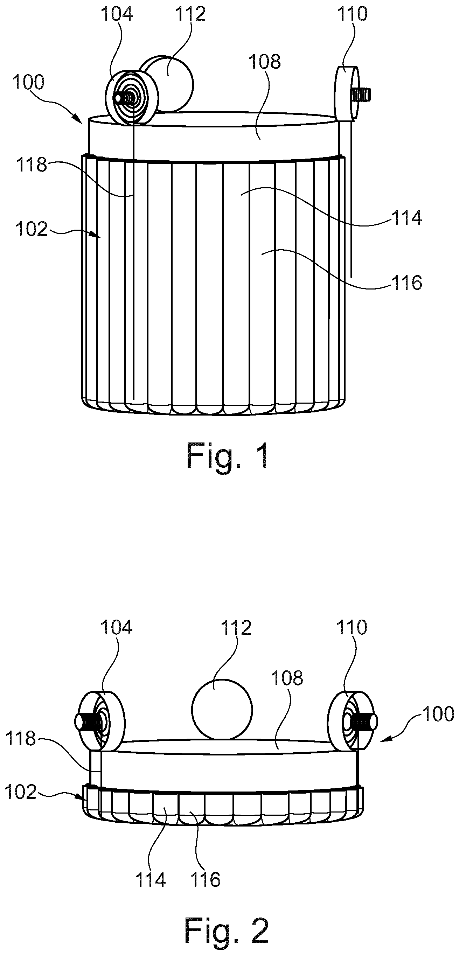

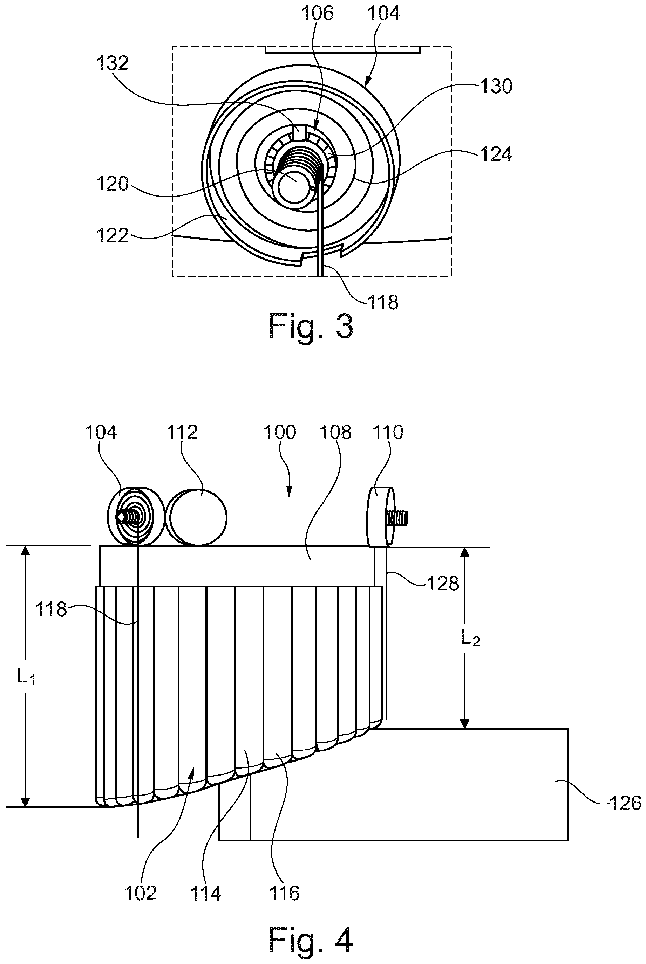

Fig. 1 zeigt eine Funktionsvorrichtung 100 mit einer befüllbaren und/oder evakuierbaren biegeschlaffen Hülle 102 und einer Rückziehvorrichtung mit einer Sensoreinrichtung in einem vollständig befüllten Zustand in Aktivform. Fig. 2 zeigt die Funktionsvorrichtung 100 in einem vollständig evakuierten Zustand in Deaktivform. Fig. 3 zeigt ein Rückziehmodul 104 der Rückziehvorrichtung mit einem Sensor 106. Fig. 4 zeigt die Funktionsvorrichtung 100 bei einem Befüllen mit Kollision.

Die Funktionsvorrichtung 100 ist als Schutzvorrichtung für einen Effektor eines Manipulators ausgeführt und weist einen ring- oder scheibenförmigen Basisabschnitt 108 auf. Die Rückziehvorrichtung weist drei Rückziehmodule 104, 110, 112 auf. Die Hülle 102 ist unterseitig radial außenseitig an dem Basisabschnitt 108 angeordnet. Die Rückziehmodule 104, 110, 112 sind oberseitig radial außenseitig und in Umfangsrichtung gelichmäßig verteil an dem Basisabschnitt 108 angeordnet. Die Hülle 102 begrenzt befüllbare und/oder evakuierbare Kammern bzw. Druckräume, wie 114, 116 und weist einen Einlass zum Befüllen der Kammern bzw. Druckräume 114, 116 mit Luft und einen Auslass zum Evakuieren der Kammern bzw. Druckräume 114, 116 auf. Die Funktionsvorrichtung 100 weist ein Beaufschlagungsmodul mit einem Druckerzeuger, beispielsweise einer Pumpe, zum Befüllen und/oder Evakuieren der Kammern bzw. Druckräume 114, 116 und Drucksensoren zum Erfassen eines Drucks in den Kammern bzw. Druckräumen 114, 116 auf.

In dem in Fig. 1 gezeigten vollständig befüllten Zustand weist die Hülle 102 eine hohlzylinderartige Aktivform auf, in der die Hülle 102 vollständig entfaltet und innendruckbedingt gespannt ist. In dem in Fig. 2 gezeigten vollständig evakuierten Zustand weist die Hülle 102 eine ringartige Deaktivform auf, in der die Hülle 102 eingezogen und zusammengefaltet ist.

Im Folgenden wird stellvertretend für alle Rückziehmodule 104, 110, 112 nur das Rückziehmodul 104 beschrieben. Das Rückziehmodul 104 weist ein als Seil ausgeführtes Zugmittel 118, ein als Welle ausgeführtes Auf- und/oder Abwickelelement 120, den Sensor 106, der als Inkrementaldrehgeber mit einer mit dem Auf- und/oder Abwickelelement 120 drehbaren Geberscheibe 130 und einem basisabschnittfesten Sensorelement 132, einen als Spiralfeder ausgeführten mechanischen Energiespeicher, der als Antrieb 124 dient, und ein Gehäuse 122 auf. Die als Antrieb 124 dienende Spiralfeder stützt sich einerseits an dem Gehäuse 122 und andererseits an der als Auf- und/oder Abwickelelement 120 dienenden Welle ab. Das Zugmittel 118 weist ein mit dem Auf- und/oder Abwickelelement 120 zugfest verbundenes erstes Ende und ein mit einem von dem Basisabschnitt 108 entfernten Randabschnitt der Hülle 102 zugfest verbundenes zweites Ende auf. Der Sensor 106 weist eine auf.

Die Funktionsvorrichtung 100 weist eine elektrische Kontrolleinrichtung auf, der Signale der Drucksensoren zum Erfassen eines Drucks in den Kammern bzw. Druckräumen 114, 116 und/oder Signale der Sensoren, wie 106, des Rückziehmoduls 104 zur Verfügung stehen. Mithilfe der Funktionsvorrichtung 100 werden die Signale der Drucksensoren und/oder die Signale der Sensoren 106 ausgewertet. Mithilfe der Funktionsvorrichtung 100 werden/wird die Rückziehvorrichtung und/oder das Beaufschlagungsmodul kontrolliert.

Um die Funktionsvorrichtung 100 zu aktivieren, werden ausgehend von der Deaktivform die Kammern bzw. Druckräume 114, 116 mithilfe des Beaufschlagungsmoduls über den Einlass mit Luft befüllt, bis die Hülle 102 vollständig entfaltet und innendruckbedingt gespannt ist. Dabei werden die Zugmittel, wie 118, ausgezogen und von den als Welle ausgeführten Auf- und/oder Abwickelelementen, wie 120, abgewickelt, wobei die Auf- und/oder Abwickelelemente 120 gedreht und die als mechanischen Energiespeicher dienenden Spiralfedern gespannt werden.

Um die Funktionsvorrichtung 100 zu deaktivieren, werden ausgehend von der Aktivform die Kammern bzw. Druckräume 114, 116 mithilfe des Beaufschlagungsmoduls über den Auslass evakuiert, bis die Hülle 102 vollständig eingezogen und zusammengefaltet ist. Dabei werden die Zugmittel 118 eingezogen, indem die als Welle ausgeführten Auf- und/oder Abwickelelemente 120 unter Nutzung der in den Spiralfedern gespeicherten mechanischen Energie gedreht und die Zugmittel 118 aufgewickelt werden.

Das Aktivieren und/oder Deaktivieren wird mithilfe der elektrischen Kontrolleinrichtung unter Berücksichtigung der Signale der Drucksensoren und/oder die Signale der Sensoren 106 überwacht, wobei Sensorsignal-Soll-Verläufe und Sensorsignal-Ist-Verläufe miteinander verglichen werden. Wenn beispielsweise, wie in Fig. 4 gezeigt, bei einem Befüllen der Kammern bzw. Druckräume 114, 116 die Hülle 102 mit einem Kollisionsobjekt 126 kollidiert, wird aufgrund einer Abweichung der Länge L₂ des Zugmittels 128 von der Länge L₁ des Zugmittel 118 die Kollision erkannt und ein Fehlersignal ausgegeben, woraufhin das Befüllen unterbrochen wird.

Mit "kann" sind insbesondere optionale Merkmale der Erfindung bezeichnet. Demzufolge gibt es auch Weiterbildungen und/oder Ausführungsbeispiele der Erfindung, die zusätzlich oder alternativ das jeweilige Merkmal oder die jeweiligen Merkmale aufweisen.

Aus den vorliegend offenbarten Merkmalskombinationen können bedarfsweise auch isolierte Merkmale herausgegriffen und unter Auflösung eines zwischen den Merkmalen gegebenenfalls bestehenden strukturellen und/oder funktionellen Zusammenhangs in Kombination mit anderen Merkmalen zur Abgrenzung des Anspruchsgegenstands verwendet werden.

### Bezugszeichen

- 100: Funktionsvorrichtung
- 102: Hülle
- 104: Rückziehmodul
- 106: Sensor
- 108: Basisabschnitt
- 110: Rückziehmodul
- 112: Rückziehmodul
- 114: Kammer, Druckraum
- 116: Kammer, Druckraum
- 118: Zugmittel
- 120: Auf- und/oder Abwickelelement
- 122: Gehäuse
- 124: Antrieb
- 126: Kollisionsobjekt
- 128: Zugmittel

## Patentansprüche

1. Rückziehvorrichtung für eine befüllbare und/oder evakuierbare biegeschlaffe Hülle (102), die Rückziehvorrichtung aufweisend wenigstens ein ausziehbares und/oder zurückziehbares Zugmittel (118, 128) und wenigstens einen Antrieb (124) zum Zurückziehen des wenigstens einen Zugmittels (118, 128), **dadurch gekennzeichnet, dass** die Rückziehvorrichtung eine Sensoreinrichtung mit wenigstens einem Sensor (106) aufweist, die dazu ausgelegt ist, ein Ausziehen und/oder Zurückziehen des wenigstens einen Zugmittels (118, 128) zu erfassen.

2. Rückziehvorrichtung nach Anspruch 1, **dadurch gekennzeichnet, dass** die Rückziehvorrichtung mehrere Zugmittel (118, 128) und/oder mehrere Antriebe (124) und die Sensoreinrichtung mehrere Sensoren (106) aufweist.

3. Rückziehvorrichtung nach wenigstens einem der vorhergehenden Ansprüche, **dadurch gekennzeichnet, dass** der wenigstens eine Sensor (106) dem wenigstens einen Zugmittel (118, 128) oder dem wenigstens einen Antrieb (124) zugeordnet ist.

4. Rückziehvorrichtung nach wenigstens einem der vorhergehenden Ansprüche, **dadurch gekennzeichnet, dass** der wenigstens eine Antrieb (124) ein Auf- und/oder Abwickelelement (120) für das wenigstens eine Zugmittel (118, 128) aufweist und der wenigstens eine Sensor (106) dem Auf- und/oder Abwickelelement (120) zugeordnet ist.

5. Rückziehvorrichtung nach wenigstens einem der vorhergehenden Ansprüche, **dadurch gekennzeichnet, dass** die Sensoreinrichtung wenigstens einen Wegsensor, insbesondere wenigstens einen Linearwegsensor und/oder wenigstens einen Drehwegsensor, und/oder wenigstens einen Kraftsensor aufweist.

6. Rückziehvorrichtung nach wenigstens einem der vorhergehenden Ansprüche, **dadurch gekennzeichnet, dass** die Rückziehvorrichtung eine elektrische Auswerteinrichtung zum Auswerten von Signalen der Sensoreinrichtung aufweist.

7. Funktionsvorrichtung mit einer befüllbaren und/oder evakuierbaren biegeschlaffen Hülle (102), **dadurch gekennzeichnet, dass** die Funktionsvorrichtung eine Rückziehvorrichtung nach wenigstens einem der vorhergehenden Ansprüche aufweist.

8. Funktionsvorrichtung nach Anspruch 7, **dadurch gekennzeichnet, dass** das wenigstens eine Zugmittel (118, 128) bei einem Befüllen der Hülle (102) ausgezogen wird.

9. Funktionsvorrichtung nach wenigstens einem der Ansprüche 7 bis 8, **dadurch gekennzeichnet, dass** die Hülle (102) in einem vollständig befüllten Zustand eine vorbestimmte Aktivform aufweist und/oder in einem vollständig evakuierten Zustand eine vorbestimmte Deaktivform aufweist.

10. Funktionsvorrichtung nach wenigstens einem der Ansprüche 7 bis 9, **dadurch gekennzeichnet, dass** die Hülle (102) wenigstens einen Druckraum (114, 116) begrenzt und die Funktionsvorrichtung wenigstens einen Drucksensor zum Erfassen eines Drucks in dem wenigstens einen Druckraum (114, 116) aufweist.

11. Verfahren zum Betätigen einer Funktionsvorrichtung nach wenigstens einem der Ansprüche 7 bis 10, **dadurch gekennzeichnet, dass** bei einem Befüllen und/oder bei einem Evakuieren der Hülle (102) mithilfe der Sensoreinrichtung ein Ausziehen und/oder ein Zurückziehen des wenigstens einen Zugmittels (118, 128), ein Ausziehen und/oder ein Zurückziehen mehrerer Zugmittel (118, 128) und/oder ein Bilden einer Aktivform und/oder Bilden einer Deaktivform der Hülle (102) überwacht wird.

12. Verfahren nach Anspruch 11, **dadurch gekennzeichnet, dass** bei einem Überwachen Signale wenigstens eines Sensors (106) der Sensoreinrichtung und/oder wenigstens eines Drucksensors der Funktionsvorrichtung berücksichtigt werden.

13. Verfahren nach wenigstens einem der Ansprüche 11 bis 12, **dadurch gekennzeichnet, dass** bei einem Überschreiten und/oder Unterschreiten eines vorgegebenen Sensorsignal-Werts ein Fehlersignal generiert wird.

14. Verfahren nach wenigstens einem der Ansprüche 11 bis 13, **dadurch gekennzeichnet, dass** bei einem Überwachen wenigstens ein Sensorsignal-Soll-Verlauf und wenigstens ein Sensorsignal-Ist-Verlauf miteinander verglichen werden und bei einem Überschreiten einer vorgegebenen Abweichung ein Fehlersignal generiert wird.

15. Verfahren nach wenigstens einem der Ansprüche 11 bis 14, **dadurch gekennzeichnet, dass** bei einem Fehlersignal wenigstens eine Sicherheitsmaßnahme eingeleitet wird, insbesondere ein Befüllen und/oder ein Evakuieren der Hülle (102) unterbrochen wird, ein Zurückziehen des wenigstens einen Zugmittels (118, 128) unterbrochen wird und/oder eine wahrnehmbare Ausgabe erfolgt.
